(19) Europäisches Patentamt
European Patent Office
Office européen des brevets

(11) **EP 1 081 048 A1**

(12) **EUROPÄISCHE PATENTANMELDUNG**

(43) Veröffentlichungstag:
07.03.2001 Patentblatt 2001/10

(51) Int. Cl.⁷: **B65B 19/32**, G01G 11/00

(21) Anmeldenummer: 00114258.7

(22) Anmeldetag: 04.07.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.08.1999 DE 19939669**

(71) Anmelder:
**TOPACK Verpackungstechnik GmbH**
**21493 Schwarzenbek (DE)**

(72) Erfinder:
• **van Hove, Wilke**
  **21035 Hamburg (DE)**
• **Gebauer, Manfred**
  **23558 Lübeck (DE)**

(74) Vertreter:
**Eisenführ, Speiser & Partner**
**Ballindamm 3**
**20095 Hamburg (DE)**

(54) **VORRICHTUNG UND VERFAHREN ZUM FESTSTELLEN DER VOLLSTÄNDIGKEIT EINES GEBINDES**

(57) Die Erfindung betrifft eine Vorrichtung zum Feststellen der Vollständigkeit eines Gebindes (2) aus Artikeln der tabakverarbeitenden Industrie, insbesondere Zigarettenpackungen. Die Erfindung zeichnet sich dadurch aus, daß ein Vergleichsmittel (50) vorgesehen ist, eine Waage (32) zum Feststellen des Gewichtes des Gebindes (2), die mit dem Vergleichsmittel verbunden ist, und ein Speicher (64) vorgesehen ist, zum Speichern eines Sollgewichtes eines vollständigen Gebindes, welcher Speicher (64) ebenfalls mit dem Vergleichsmittel (50) verbunden ist, wobei mit dem Vergleichsmittel feststellbar ist, ob das festgestellte Gewicht im wesentlichen dem Sollgewicht entspricht.

Fig. 1

**Beschreibung**

Die Erfindung betrifft eine Vorrichtung zum Feststellen der Vollständigkeit eines Gebindes aus Artikeln der tabakverarbeitenden Industrie, insbesondere eines Gebindes aus Zigarettenpackungen.

Derartige Vorrichtungen dienen dazu, zu prüfen, ob sich tatsächlich alle Artikel, die in einem Gebinde miteinander verbunden sein sollen, in diesem Gebinde befinden. Sollen sich beispielsweise zehn Artikel in dem Gebinde befinden, so wird mit einer derartigen Vorrichtung geprüft, ob tatsächlich alle zehn Artikel in dem Gebinde vorhanden sind. Stellt nun eine solche Vorrichtung fest, daß ein Artikel in dem Gebinde fehlt, das Gebinde also nicht vollständig ist, so kann diese Information beispielsweise von einer Auswurfvorrichtung verwendet werden, die das unvollständige Gebinde aussortiert.

Aufgabe der vorliegenden Erfindung ist es, eine Vorrichtung der eingangs genannten Art zu verbessern.

Diese Aufgabe wird erfindungsgemäß gelöst durch ein Vergleichsmittel, durch eine mit dem Vergleichsmittel verbundene Waage zum Feststellen des Gewichtes des Gebindes, und durch einen mit dem Vergleichsmittel verbundenen Speicher zum Speichern eines Sollgewichtes eines vollständigen Gebindes, wobei mit dem Vergleichsmittel feststellbar ist, ob das festgestellte Gewicht im wesentlichen dem Sollgewicht entspricht.

Der Vorteil der Erfindung liegt insbesondere darin, daß durch einfaches Vergleichen eines festgestellten Gewichtes des Gebindes mit einem Sollwert eines vollständigen Gebindes auf einfache Art feststellbar ist, ob das Gebinde tatsächlich vollständig ist. Denn ist das Gebinde unvollständig, d.h. fehlt ein Artikel in dem gewogenen Gebinde, so weicht das ermittelte Gewicht des Gebindes erheblich und somit leicht feststellbar von dem Sollgewicht eines vollständigen Gebindes ab.

Eine vorteilhafte Ausführungsform der Erfindung zeichnet sich dadurch aus, daß die Waage in eine Fördereinrichtung zum Fördern des Gebindes integriert ist. Diese Ausführungsform bietet den Vorteil, daß die erfindungsgemäße Vorrichtung vollständig in eine automatische Verarbeitung der Gebinde integriert werden kann. Es kommt daher bei dieser Ausführungsform zu keiner Unterbrechung des Arbeitsflusses bei der Herstellung und Verpackung von den entsprechenden Artikeln bzw. von den Gebinden.

Bei der vorgenannten Ausführungsform kann die Waage derart in die Fördereinrichtung integriert sein, daß die Bewegung des Gebindes zu keinem Zeitpunkt unterbrochen wird. Die Waage kann jedoch auch in eine intermittierende Fördereinrichtung integriert sein, die ein intermittierend arbeitendes Förderband aufweist, welches Förderband die Förderung des Gebindes, wenn das Gebinde sich auf der Waage befindet, mindestens während eines für den eigentliche Wiegevorgangs notwendigen Zeitraumes unterbricht. Auf diese Weise kann der eigentliche Wiegevorgang völlig unbeeinflußt von etwaigen Bewegungskomponenten des Gebindes, die durch die Förderung verursacht werden, vorgenommen werden.

Eine weitere bevorzugte Ausführungsform der Erfindung zeigt eine Fördereinrichtung, die ein Führungsmittel aufweist, von welchem Führungsmittel das Gebinde entlang eines Förderweges geführt wird, die weiterhin ein Fördermittel aufweist, von welchem Fördermittel das Gebinde entlang des Förderweges bewegbar ist, wobei bei dieser Ausführungsform die Waage in das Führungsmittel integriert ist. Auch diese Ausführungsform zeichnet sich daher durch eine vorteilhafte Trennung von Förderung und Wiegevorgang aus. Denn durch die Integration der Waage in das Führungsmittel und die Trennung von Führungsmittel und eigentlichem Fördermittel bleibt auch hier der eigentliche Wiegevorgang von Bewegungskomponenten der eigentlichen Förderung unbeeinflußt und somit in hohem Maße fehlerfrei.

Eine vorteilhafte weitere Ausführungsform weist als Führungsmittel feste Gleitflächen auf, auf welchen Gleitflächen die Gebinde während der Förderung gleiten, und in welche Gleitflächen eine Wiegeplatte der Waage integriert ist, auf welcher Wiegeplatte das Gebinde wigbar ist. Eine derartige Wiegeplatte läßt sich besonders leicht in ebene und glatte Gleitflächen für die Gebinde integrieren. Eine solche Wiegeplatte bietet somit die Gewähr, daß das Gebinde problemlos von den Gleitflächen der Führungsmittel auf die Waage und von der Waage wieder herunter gelangen kann, ohne daß die Gefahr besteht, daß das Gebinde an der Waage hängen bleibt.

Eine weitere vorteilhafte Ausführungsform weist als Fördermittel ein Nockenband auf, welches mit ersten Schiebern versehen ist, die das Gebinde vor sich herschieben. Dieses Nockenband kann insbesondere zwischen den Gleitflächen der Führungsmittel laufen, so daß auch die Schieber zwischen den Gleitflächen aus der Ebene der Gleitflächen herausragen und so die Gebinde zum Fördern in nacheilender Weise erfassen können.

In einer weiteren bevorzugten Weiterbildung der Erfindung ist das Nockenband mit zweiten, verstellbaren Schiebern versehen, so daß die zu fördernden Gebinde jeweils zwischen den ersten und zweiten Schiebern einklemmbar sind. Dabei kann der Abstand zwischen den beiden Schiebern mittels des zweiten, verstellbaren Schiebers an die jeweilige Gebindeabmessung angepaßt werden. Diese Ausführungsform stellt daher sicher, daß die erfindungsgemäße Vorrichtung an jede Gebindegräße flexibel anpassbar ist. Eine andere vorteilhafte Weiterbildung der Erfindung zeigt eine Waage, die eine Meßzelle aufweist, welche Meßzelle einen Dehnungsmeßstreifen zum Messen des Gewichtes des Gebindes enthält. Mit einem solchen Dehnungsmeßstreifen läßt sich der Wiegevorgang besonders einfach bewerkstelligen.

Weiterhin betrifft die Erfindung ein Verfahren zum Feststellen der Vollständigkeit eines Gebindes aus Artikeln der tabakverarbeitenden Industrie, insbesondere von Gebinden aus Zigarettenpackungen. Das erfindungsgemäße Verfahren zeichnet sich dadurch aus, daß zunächst das Gewicht des Gebindes ermittelt wird und anschließend das ermittelte Gewicht mit einem Sollwert verglichen wird. Die Vorteile des erfindungsgemäßen Verfahrens stimmen mit denen der oben beschriebenen, das Verfahren ausführenden Vorrichtung überein.

Eine Weiterbildung des Verfahrens zeigt eine intermittierend arbeitende Fördereinrichtung, mittels derer das Gebinde auf eine Waage gefördert wird, so daß das Gebinde bei stillstehender Förderung gewogen wird, und nach Abschluß des Wiegevorgangs weiter befördert wird.

Eine besonders bevorzugte Ausführungsform des erfindungsgemäßen Verfahrens ermittelt das Sollgewicht durch Mittelwertbildung der Gewichte vorher gewogener Gebinde. Dabei wird der Mittelwert bevorzugt nach jedem Wiegevorgang neu ermittelt. Somit kann dank des erfindungsgemäßen Verfahrens sicher unterschieden werden zwischen möglichen langandauernden Veränderungen im Gesamtgewicht der zu messenden Gebinde und der gewünschten Feststellung des Fehlens eines Artikels in einem Gebinde. So könnte sich beispielsweise über einen längeren Zeitraum das Gewicht der Verpackungsmaterialien des Gebindes oder auch der Umhüllungen der einzelnen Artikel ändern, sodaß die Feststellung der Vollzähligkeit des Gebindes aufgrund eines vor dieser Veränderung ermittelten Sollgewichtes erschwert werden könnte.

Eine weitere bevorzugte Ausführungsform des Verfahrens schließt bei der Ermittlung des Mittelwertes die Gewichte von Gebinden aus, die mehr als (1/Sollanzahl der Artikel im Gebinde) von dem bisherigen Mittelwert abweichen. Auf diese Weise wird vorteilhaft erreicht, daß der Mittelwert nicht von fehlerhaften Gebinden beeinflußt wird. Das ermittelte Sollgewicht orientiert sich somit nur an vollständigen Gebinden, so daß der Mittelwert nicht durch unvollständige Gebinde verwässert wird und einen zu großen Fehler aufweist.

Weitere bevorzugte Ausführungsformen der Erfindung sind in den Unteransprüchen angegeben.

Eine bevorzugte Ausführungsform der Erfindung wird nunmehr mit Bezug auf die Zeichnung beschrieben. Die Zeichnung zeigt die folgenden Figuren:

Fig. 1 ist eine schematische Seitenansicht einer erfindungsgemäßen Vorrichtung;

Fig. 2 ist eine schematische Vorderansicht der Vorrichtung der Fig. 1 entgegen der Förderrichtung; und

Fig. 3 ist ein Blockschaltbild der erfindungsgemäßen Mittelwertermittlung.

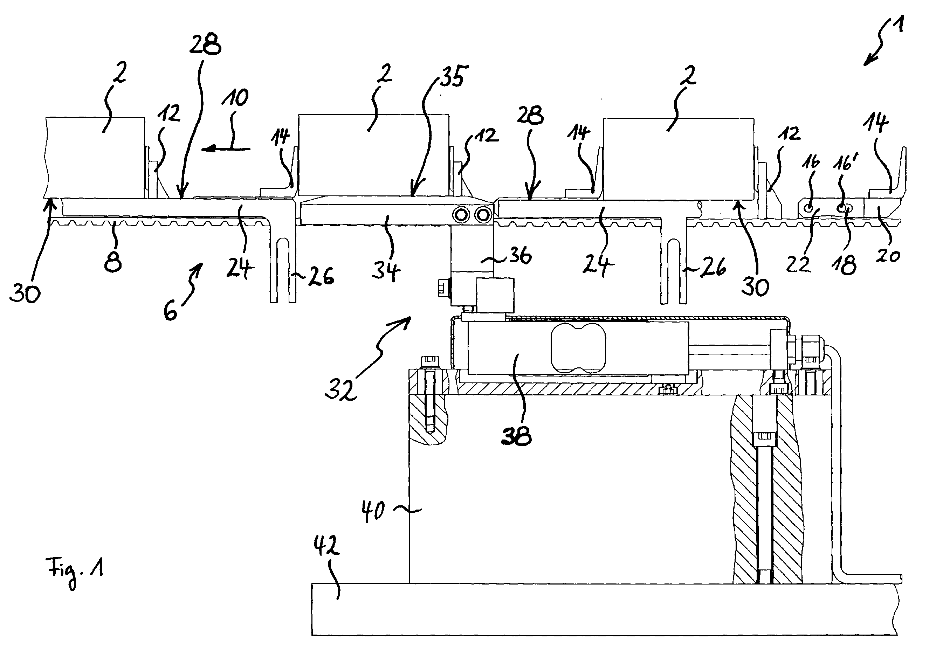

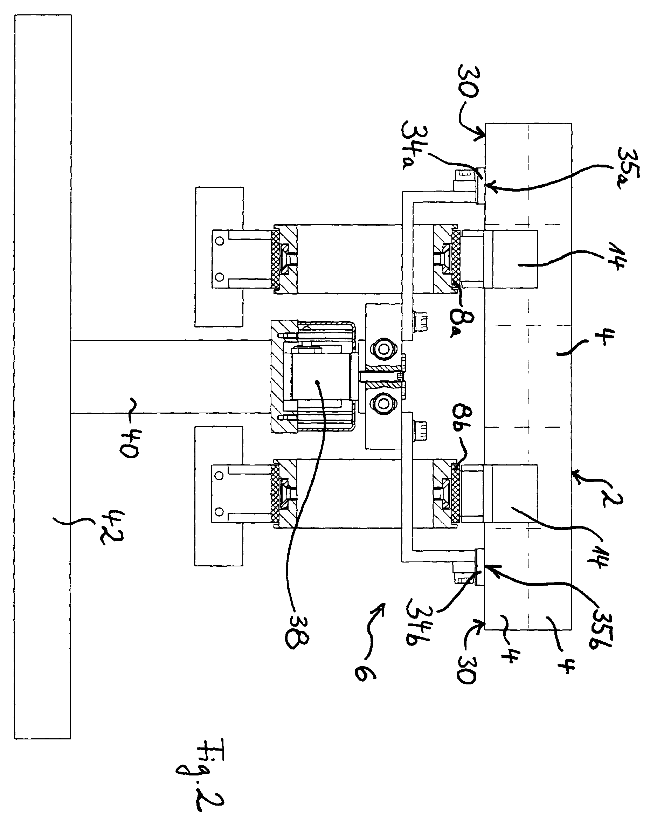

Fig. 1 zeigt eine erfindungsgemäße Vorrichtung 1 zum Feststellen der Vollständigkeit von Gebinden 2 aus Zigarettenpackungen 4. Die Zigarettenpackungen 4 der Gebinde 2 sind in der Fig. 2 durch gestrichelte Linien auf dem Gebinde 2 schematisch angedeutet.

Die Vorrichtung 1 weist eine Fördereinrichtung 6 zum Fördern der Gebinde 2 auf. Die Fördereinrichtung 6 weist als erfindungsgemäßes Fördermittel ein Nockenband 8 auf. Das Nockenband 8 verläuft horizontal und fördert die Gebinde 2 in der durch den Pfeil 10 angedeuteten Richtung. Zur Kraftübertragung der Bewegung des Nockenbandes 8 auf die Gebinde 2 weist das Nockenband fest mit dem Nockenband verbundene Schieber 12 auf. Die Schieber 12 ragen senkrecht von dem Nockenband nach oben ab und schieben die Gebinde 2 als nacheilender Schieber 12 vor sich her. Weiterhin weist das Nockenband 8 voreilende Schieber 14, die mit den nacheilenden Schiebern 12 zusammenwirken, um das Gebinde 2 zwischen sich festzuhalten.

Der voreilende Schieber 14 steht ebenfalls senkrecht von dem Nockenband 8 ab und ist darüber hinaus entlang der Längserstreckung des Nockenbandes verstellbar ausgeführt. Zu diesem Zweck ist der Schieber 14 mit Schrauben 16 und 16' versehen, wobei die Schraube 16' in einem Langloch 18 verstellbar ist und mit dem eigentlichen Grundkörper 20 des Schiebers 14 verbunden ist, während die Schraube 16 das das Langloch aufweisende Führungsstück 22 an dem Nockenband 8 befestigt.

Weiterhin weist die Fördereinrichtung 6 als erfindungsgemäße Führungsmittel dienend Gleitschienen 24 auf. Die Gleitschienen sind über Befestigungsenden 26 an einem nicht dargestellten Grundkörper der Vorrichtung 1 befestigt. Die Gleitschienen 24 weisen Gleitflächen 28 auf, auf denen die Gebinde 2 mit ihren Unterseiten 30 gleiten.

In die Vorrichtung 1 integriert ist eine Waage 32. Die Waage 32 weist eine in die Reihe der Gleitschienen 24 integrierte Wiegeplatte 34 auf. Die Wiegeplatte 34 ist über ein Zwischenstücke 36 mit einer Meßzelle 38 der Waage 32 verbunden. Die Meßzelle 38 weist zum Feststellen des Gewichtes eines sich auf der Wiegeplatte 34 befindenden Gebindes 2 einen Dehnungsmeßstreifen auf. Die Meßzelle 38 ist mit einem nicht dargestellten Computer verbunden, welcher die Meßwerte der Waage 32 erfaßt. Der Computer vergleicht die von der Waage 32 festgestellten Meßwerte mit einem Sollgewicht für die zu wiegenden Gebinde 2 und gibt an eine nicht dargestellte, stromabwärts von der Vorrichtung 1 liegende Auswurfvorrichtung den Befehl zum Aussortieren eines Gebindes 2, wenn dieses Gebinde 2 um mehr als das Gewicht einer Zigarettenpackung von dem Sollgewicht für die zu wiegenden Gebinde 2 abweicht.

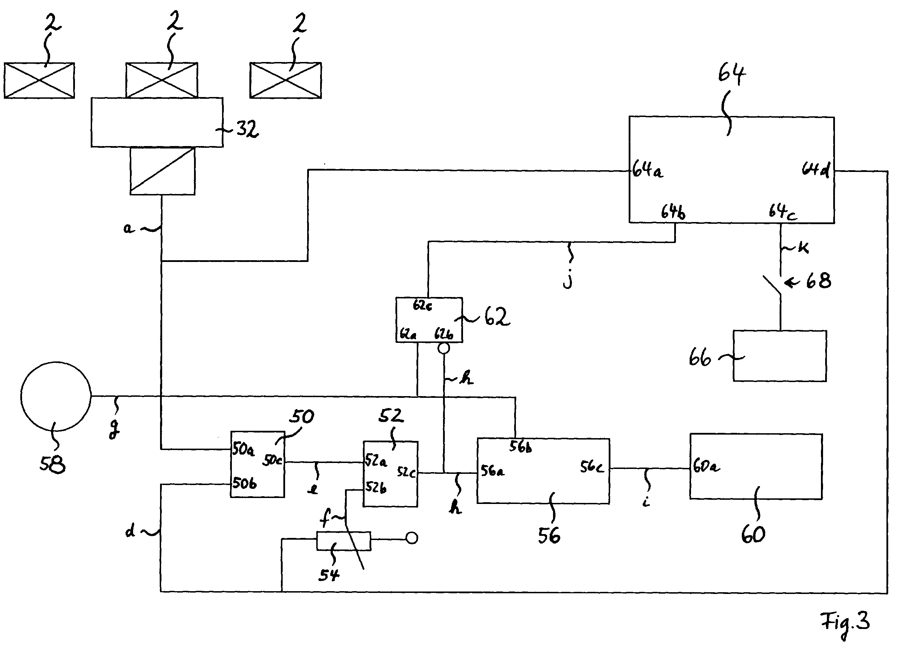

Zur Feststellung des Sollgewichtes bildet der Computer den Mittelwert von vorher gewogenen Gebinden 2. Bezüglich dieser Mittelwertbildung wird auf die weiter unten folgende Beschreibung zur Fig. 3 verwiesen.

Die Waage 32 mitsamt der Meßzelle 38 befindet sich auf einem Gehäuse 40, welches auf einem Fundament 42 gelagert ist.

Die Fig. 2 zeigt die Vorrichtung 1 der Fig. 1 in einer Frontansicht entgegen der Förderrichtung 10 des Nockenbandes 8. Gleiche Teile sind mit gleichen Bezugzeichen beschrieben.

Die Fig. 2 zeigt durch Vergleich mit der Seitenansicht gemäß Fig. 1, daß die Gebinde 2 quer zu ihrer Längsausdehnung gefördert werden. Weiterhin zeigt die Fig. 2, daß das Nockenband 8 zweiteilig ausgeführt ist, d.h. ein in der Fig. 2 links dargestelltes Teilband 8a und ein in der Fig. 2 rechts dargestelltes Teilband 8b aufweist. Jedes dieser Teilbänder 8a und 8b trägt die in der Fig. 1 dargestellten und dort beschriebenen Schieber 14.

Die Nockenbänder 8a und 8b laufen zwischen der ebenfalls in einen linken 34a und einen rechten Teil 34b aufgeteilten Wiegeplatte 34. Das in der Fig. 2 dargestellte Gebinde 2 befindet sich mit seiner Unterseite 30 auf den Oberflächen 35a bzw. 35b der Teile 34a bzw. 34b der Wiegeplatte 34.

Die Fig. 3 zeigt ein Blockschaltbild zur Darstellung der Funktionsweise des mit der Vorrichtung 1 verbundenen Computers zur Erfassung der Meßwerte der Waage 32, zur Mittelwertbildung der gemessenen Gewichte der Gebinde 2, und zur Weiterleitung eines entsprechenden Signals an eine Auswurfvorrichtung zum Auswerfen unvollständiger Gebinde 2. Gleiche Teile sind in der Fig. 3 mit gleichen Bezugzeichen bezeichnet, auch wenn diese Teile in der Fig. 3 nur symbolisch dargestellt sind.

Die Fig. 3 zeigt Gebinde 2, von denen das mittlere Gebinde 2 sich auf der Waage 32 befindet. Die Waage 32 gibt einen zum gemessenen Gewicht des Gebindes 2 proportionalen Spannungswert a an einen Eingang 50a eines Differenzverstärkers 50 ab. Der Differenzverstärker 50 vergleicht den Spannungswert a mit einem Mittelwert d der letzten n Messungen. Der Mittelwert d liegt an einem Eingang 50b des Differenzverstärkers 50 an.

An einem Ausgang 50c des Differenzverstärkers 50 wird eine zur Abweichung des Wertes a von dem Wert d proportionale Differenzspannung e abgegeben, die einen Wert für die Beurteilung der Vollständigkeit des mit der Waage 32 gewogenen Gebindes 2 darstellt.

Die Differenzspannung e wird einem Eingang 52a eines Vergleichers 52 zugeführt. Der Vergleicher 52 vergleicht die Differenzspannung e mit einem Spannungswert f eines Potentiometers 54. Der Betrag der von dem Potentiometer 54 einstellbaren Spannung f gibt einen Wert für die Höhe der zulässigen Abweichung, d.h. eine Toleranzvorgabe vor. Für diese Toleranzvorgabe ist nur der Betrag der Spannung f relevant, jedoch nicht das Vorzeichen der Spannung f.

Wenn die am Eingang 52a des Vergleichers 52 anliegende Spannung e größer ist als die am Eingang 52b anliegende Spannung f, so wird der digitale Ausgang 52c des Vergleichers 52 auf HIGH gesetzt. Dieses HIGH-Signal bewirkt über ein Schieberegister 56 und einem Schalttakt g von einem Taktwerk 58 die Aktivierung eines Auswerfers 60. Das HIGH-Signal h des Ausganges 52c des Vergleichers 52 liegt an einem Eingang 56a des Schieberegisters 56 an. Der Schalttakt g des Taktwerkes 58 liegt an einem Eingang 56b des Schieberegisters 56 an. Das Schieberegister 56 gibt das Aktivierungssignal i über einen Eingang 56c an einen Eingang 60a an den Auswerfer 60 ab.

Weiterhin verhindert das HIGH-Signal h an einem Eingang 62b eines UND-Gliedes die Freigabe eineraktualisierten Mittelwertberechnung in einen Mittelwertbildner 64 unter Verwendung des aktuellen Gewichtes.

Wenn jedoch die an dem Eingang 52a des Vergleichers 52 anliegende Spannung e betragsmäßig kleiner ist als die über das Potentiometer vorgegebenen Spannung f, so bedeutet dies, daß das gemessene Gewicht des aktuell auf der Waage 32 sich befindenden Gebindes 2 innerhalb der Toleranz liegt. Dann geht das Ausgangssignal h des Vergleichers 52 auf LOW. Liegt ein solches LOW-Signal h am Eingang 56a des Schieberegisters 56 an, so wird kein Auswurfsignal i an den Eingang 60a des Auswerfers 60 von dem Ausgang 56c des Schieberegisters 56 abgegeben. Gleichzeitig wird durch ein solches LOW-Signal h über einen Ausgang 62c des UND-Gliedes 62 ein Freigabesignal j an einen Eingang 64b des Mittelwertbildners 64 abgegeben, so daß der Mittelwertbildner 64 eine Mittelwertberechnung auch unter Verwendung des aktuellen Gewichtes vornehmen kann.

Die Mittelwertbildung mit Hilfe des Mittelwertbildners 64 mit dem dann aktuell am Eingang 64a des Mittelwertbildners 64 anliegenden Meßwert der Waage 32 erfolgt demnach, sobald am Eingang 64b des Mittelwertbildners 64 ein HIGH-Signal j anliegt. Der Mittelwert wird dann über den Ausgang 64d des Mittelwertbildners 64 als Signal d an den Differenzverstärker 50 abgegebenen.

Der Mittelwert d berechnet sich aus den zuletzt gemessenen n Spannungswerten a, die ein HIGH-Signal j zur Folge hatten. Die Berechnung geschieht wie folgt:

$$d = (a_{aktuell} + a_{n-1} + a_{n-2})/n$$

Wenn bei Neustart der Vorrichtung 1 noch keine Mittelwerte im Mittelwertbildner 64 vorliegen, was etwa bei einer ersten Inbetriebnahme der Vorrichtung 1 der Fall sein kann, oder bei einem Formatwechsel der zu wiegenden Gebinde 2, kann ein Anfangswert k über einen Eingang 64c von einer Anfangswertvorgabeeinrichtung 66 und einen Schalter 68 in den Mittelwertbildner 64 eingegeben werden.

**Patentansprüche**

1. Vorrichtung zum Feststellen der Vollständigkeit eines Gebindes (2) aus Artikeln der tabakverarbeitenden Industrie, insbesondere Zigarettenpackungen (2),
gekennzeichnet durch

> ein Vergleichsmittel,
> eine mit dem Vergleichsmittel (50) verbundene Waage (32) zum Feststellen des Gewichtes (a) des Gebindes (2),
> und einen mit dem Vergleichsmittel verbundenen Speicher (64) zum Speichern eines Sollgewichtes (d) eines vollständigen Gebindes,
> wobei mit dem Vergleichsmittel (50) feststellbar ist, ob das festgestellte Gewicht (a) im wesentlichen dem Sollgewicht (d) entspricht.

2. Vorrichtung nach Anspruch 1,
wobei die Waage (32) in eine Fördereinrichtung (6) zum Fördern des Gebindes (2) integriert ist.

3. Vorrichtung nach Anspruch 2,
wobei die Waage (32) derart in die Fördereinrichtung (6) integriert ist, daß das Gewicht (a) des Gebindes (2) während der Förderung des Gebindes (2) feststellbar ist.

4. Vorrichtung nach mindestens einem der Ansprüche 2 oder 3,
wobei die Fördereinrichtung (6) ein derartig intermittierendes Förderband (8) auf weist, daß die Förderung des Gebindes (2), wenn es sich auf der Waage (32) befindet, mindestens während eines für den Wiegevorgang notwendigen Zeitraumes innehält.

5. Vorrichtung nach einem der Ansprüche 2 bis 4,
wobei die Fördereinrichtung (6) aufweist:

> - ein Führungsmittel (24), von welchem Führungsmittel das Gebinde (2) entlang eines Förderweges führbar ist,
> - ein Fördermittel (8, 12, 14), von welchem das Gebinde (2) entlang des Förderweges bewegbar ist,

> und wobei die Waage (32) in das Führungsmittel (24) integriert ist.

6. Vorrichtung nach Anspruch 5,
wobei das Führungsmittel (24) feste Gleitflächen (28) aufweist, auf welchen Gleitflächen (28) die Gebinde (2) während der Förderung gleiten, und in welche Gleitflächen (28) eine Wiegeplatte (34) der Waage (32) integriert ist, auf welcher Wiegeplatte (34) das Gebinde (2) wiegbar ist.

7. Vorrichtung nach einem der Ansprüche 5 oder 6,
wobei das Fördermittel (8, 12, 14) ein Nockenband (8) aufweist, welches Nockenband (8) mit ersten Schiebern (12) versehen ist, die das Gebinde (2) vorantreiben.

8. Vorrichtung nach Anspruch 7,
wobei das Nockenband (8) zweite, verstellbare Schieber (14) aufweist, so daß das Gebinde (2) zwischen erstem (12) und zweitem Schieber (14) einklemmbar ist, während der Abstand zwischen den beiden Schiebern (12) und (14) mittels des zweiten Schiebers (14) an die Gebindegröße anpassbar ist.

9. Vorrichtung nach einem der vorstehenden Ansprüche,
wobei die Waage (32) zum Messen des Gewichtes (a) des Gebindes (2) einen Dehnungsmeßstreifen aufweist.

10. Verfahren zum Feststellen der Vollständigkeit eines Gebindes (2) aus Artikeln der tabakverarbeitenden Industrie, insbesondere eines Gebindes (2) aus Zigarettenpackungen (4),
mit den Schritten:

> - das Gewicht (a) des Gebindes (2) wird ermittelt,
> - das ermittelte Gewicht (a) wird mit einem Sollgewicht (d) verglichen.

11. Verfahren nach Anspruch 10,
wobei das Gebinde (2) mittels einer intermittierend arbeitenden Fördereinrichtung (8, 12, 14) auf eine Waage (32) gefördert wird, so daß das Gebinde (2) bei stillstehender Förderung gewogen wird, und nach Abschluß des Wiegevorganges weiter befördert wird.

12. Verfahren nach einem der Ansprüche 10 oder 11,
wobei das Sollgewicht (d) durch Mittelwertbildung der Gewichte (a) vorher gewogener Gebinde (2) ermittelt wird.

13. Verfahren nach Anspruch 12,
wobei der Mittelwert (d) nach jedem Wiegevorgang aktualisiert wird.

14. Verfahren nach Anspruch 13,
wobei bei der Aktualisierung des Mittelwertes (d) die Gewichte (a) von Gebinden (2) ausgeschlossen werden, die mehr als (1/Sollanzahl der Artikel (4) im

**EP 1 081 048 A1**

Gebinde (2)) von dem bisherigen Mittelwert (d) abweicht.

Fig. 1

Fig. 2

| Europäisches Patentamt | EUROPÄISCHER RECHERCHENBERICHT | Nummer der Anmeldung EP 00 11 4258 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 32 40 254 A (BAT CIGARETTENFAB GMBH) 3. Mai 1984 (1984-05-03) * Seite 1, Zeile 1 - Seite 4, Zeile 2; Abbildungen * | 1,10 | B65B19/32 G01G11/00 |
| A | US 5 331 118 A (JENSEN SOREN) 19. Juli 1994 (1994-07-19) * Spalte 3, Zeile 42 - Spalte 6, Zeile 40; Abbildungen * | 1,10 | |
| A | US 5 736 682 A (HEITMANN UWE ET AL) 7. April 1998 (1998-04-07) * Spalte 12, Zeile 25 - Spalte 16, Zeile 15; Abbildungen * | 1,10 | |
| A | US 4 972 494 A (WHITE KENNETH W ET AL) 20. November 1990 (1990-11-20) * Spalte 23, Zeile 5 - Spalte 24, Zeile 67; Abbildungen * | 1,10 | |
| A | US 5 560 515 A (DYETT DEREK H ET AL) 1. Oktober 1996 (1996-10-01) * Spalte 2, Zeile 3 - Spalte 4, Zeile 2; Abbildungen * | 1,10 | RECHERCHIERTE SACHGEBIETE (Int.Cl.7) B65B G01G |

Der vorliegende Recherchenbericht wurde für alle Patentansprüche erstellt

| Recherchenort | Abschlußdatum der Recherche | Prüfer |
|---|---|---|
| DEN HAAG | 27. November 2000 | Jagusiak, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 1 081 048 A1

**ANHANG ZUM EUROPÄISCHEN RECHERCHENBERICHT**
**ÜBER DIE EUROPÄISCHE PATENTANMELDUNG NR.**   EP 00 11 4258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2000

| Im Recherchenbericht angeführtes Patentdokument | Datum der Veröffentlichung | Mitglied(er) der Patentfamilie | Datum der Veröffentlichung |
|---|---|---|---|
| DE 3240254 A | 03-05-1984 | KEINE | |
| US 5331118 A | 19-07-1994 | KEINE | |
| US 5736682 A | 07-04-1998 | CN 1145753 A,B<br>DE 19612077 A<br>EP 0736753 A<br>JP 8289775 A | 26-03-1997<br>10-10-1996<br>09-10-1996<br>05-11-1996 |
| US 4972494 A | 20-11-1990 | EP 0330495 A<br>JP 1269034 A | 30-08-1989<br>26-10-1989 |
| US 5560515 A | 01-10-1996 | CN 1111486 A,B<br>DE 19507320 A<br>FR 2716969 A<br>GB 2288309 A,B<br>IT RM950125 A<br>JP 7255451 A | 15-11-1995<br>07-09-1995<br>08-09-1995<br>18-10-1995<br>04-09-1995<br>09-10-1995 |

EPO FORM P0461

Für nähere Einzelheiten zu diesem Anhang : siehe Amtsblatt des Europäischen Patentamts, Nr.12/82